# EUROPÄISCHE PATENTSCHRIFT

(11) **EP 2 890 578 B1**
(45) Veröffentlichungstag und Bekanntmachung des Hinweises auf die Patenterteilung: **03.10.2018**
(21) Anmeldenummer: 13736873.4
(22) Anmeldetag: 08.07.2013
(51) Int. Cl.: B60K 6/20, B60K 7/00, B60T 1/10, B60T 7/04, B60T 7/12, B60T 8/1755, B60L 7/26, B60L 15/20, B60W 10/08, B60W 30/18, B60W 20/00

(54) **BREMSSTEUERVORRICHTUNG FÜR EIN FAHRZEUG UND VERFAHREN ZUM BETREIBEN MINDESTENS EINES ELEKTRISCHEN ANTRIEBSMOTORS FÜR EIN FAHRZEUG**
BRAKE CONTROL DEVICE FOR A VEHICLE, AND A METHOD FOR OPERATING AT LEAST ONE ELECTRIC DRIVE MOTOR FOR A VEHICLE
DISPOSITIF DE COMMANDE D'UN FREIN DE VÉHICULE ET PROCÉDÉ DE FONCTIONNEMENT D'AU MOINS UN MOTEUR DE PROPULSION ÉLECTRIQUE D'UN VÉHICULE

(30) Priorität: 29.08.2012 DE 102012215328
(43) Veröffentlichungstag der Anmeldung: 08.07.2015
(73) Patentinhaber: Robert Bosch GmbH, 70442 Stuttgart (DE)
(72) Erfinder: KAESTNER, Frank, 74321 Bietigheim-Bissingen (DE); BAUER, Urs, 74343 Sachsenheim (DE); BUSSMANN, Otmar, 74232 Abstatt (DE)
(86) Internationale Anmeldenummer: PCT/EP2013/064384
(87) Internationale Veröffentlichungsnummer: WO 2014/032839

(56) Entgegenhaltungen:
- EP-A2- 0 901 931
- WO-A1-2004/080774
- DE-A1-102005 059 373
- DE-A1-102009 001 258
- FR-A1- 2 923 422
- GB-A- 2 450 410
- US-A- 5 378 053
- US-A- 5 399 000
- US-A1- 2011 278 913
- US-A1- 2011 304 198

## Beschreibung

Die Erfindung betrifft eine Bremssteuervorrichtung für ein Fahrzeug. Ebenso betrifft die Erfindung ein Bremssystem für ein Fahrzeug. Des Weiteren betrifft die Erfindung ein Verfahren zum Betreiben mindestens eines elektrischen Antriebsmotors für ein Fahrzeug.

### Stand der Technik

In der GB 2 282 651 A ist ein Elektrofahrzeug mit einem hydraulischen Bremssystem beschrieben. Jedem der Räder des Fahrzeugs ist ein Radbremszylinder des hydraulischen Bremssystems zugeordnet, welcher über zumindest eine Bremsleitung an dem Hauptbremszylinder des hydraulischen Bremssystems angebunden ist. Außerdem ist an mindestens einem der Räder ein elektrischer Motor angebracht, mittels welchem ein zusätzliches Abbremsen des zugeordneten Rades bewirkbar sein soll.

Aus der DE 10 2005 059 373 A1 sowie aus der GB 2 450 410 A sind weitere derartige Verfahren/ Systeme bekannt.

### Offenbarung der Erfindung

Die Erfindung schafft eine Bremssteuervorrichtung für ein Fahrzeug mit den Merkmalen des Anspruchs 1, ein Bremssystem für ein Fahrzeug mit den Merkmalen des Anspruchs 7 und ein Verfahren zum Betreiben mindestens eines elektrischen Antriebsmotors für ein Fahrzeug mit den Merkmalen des Anspruchs 8.

### Vorteile der Erfindung

Die vorliegende Erfindung ermöglicht ein gesteigertes Generator-Bremsmoment zum schnelleren Abbremsen des mindestens einen Rads während des Betreibens des mindestens einen elektrischen Antriebsmotors in dem mindestens einen Überlastbetriebsmodus. Somit kann insbesondere in einer Notbremssituation ein Fahrzeug mittels der vorliegenden Erfindung schneller abgebremst werden.

Die vorliegende Erfindung nutzt damit die Möglichkeit, dass der mindestens eine elektrische Antriebsmotor eines Fahrzeugs zumindest kurzzeitig in einem Überlastbetrieb betrieben werden kann, ohne dass eine thermische Schädigung des mindestens einen elektrischen Antriebsmotors auftritt. Somit kann zumindest kurzzeitig ein größeres Generator-Bremsmoment auf das mindestens eine zugeordnete Rad ausgeübt werden, als dies bei einem Betreiben des mindestens einen elektrischen Antriebsmotors des Fahrzeugs in einem Nennmodus/Nennbetrieb der Fall wäre. Unter dem elektrischen Antriebsmotor ist vorzugsweise ein Verbund aus einem Motor, einer Leistungselektronik und einer Steuerung zu verstehen. Normalerweise ist die Leistungselektronik bei einer kurzzeitigen Überlast die anfälligste Komponente des Verbunds. Mittels der vorliegenden Erfindung kann jedoch trotzdem zumindest kurzzeitig ein größeres Generator-Bremsmoment bewirkt werden.

Unter dem mindestens einen Überlastbetriebsmodus des mindestens einen elektrischen Antriebsmotors kann ein Modus verstanden werden, in welchem der mindestens eine elektrische Antriebsmotor eines Fahrzeugs mit einer größeren Leistung als in seinem Nennbetrieb betrieben wird. Man kann den mindestens einen Überlastbetriebsmodus des mindestens einen elektrischen Antriebsmotors deshalb als einen Modus von diesem mit einer Leistung bezeichnen, welche für ein langfristiges Betreiben des mindestens einen elektrischen Antriebsmotors mit dieser Leistung zu dessen thermischer Schädigung führen würde.

Vorzugsweise wird der mindestens eine Antriebsmotor für ein Zeitintervall in dem mindestens einen Überlastbetriebsmodus betrieben, welches kleiner als 1500 ms, vorzugsweise kleiner als 1000 ms, insbesondere kleiner als 500 ms, bevorzugter Weise kleiner als 300 ms, ist. Vorzugsweise wird der mindestens eine elektrische Antriebsmotor nach dem Zeitintervall wieder in einen Nennbetriebsmodus gesteuert oder deaktiviert. Das Betreiben des mindestens einen elektrischen Antriebsmotors in dem mindestens einen Überlastbetriebsmodus für das vorgegebene Zeitintervall bewirkt somit keine thermische Schädigung von diesem.

Das zumindest kurzzeitige Betreiben des mindestens einen elektrischen Antriebsmotors in dem mindestens einen Überlastbetriebsmodus kann für eine Überbrückung eines Zeitverzugs bei einem Aufbau eines weiteren Bremsmomentes einer fahrzeugeigenen Bremseinrichtung/Bremsanlage genutzt werden. Insbesondere kann das mindestens eine Rad des Fahrzeugs so lang mittels des in dem mindestens einen Überlastbetriebsmodus gesteuerten mindestens einen elektrischen Antriebsmotors abgebremst werden, bis die (immanente) Verzögerung beim Aufbau des Bremsmoments mindestens einer Reibbremse der Bremseinrichtung/Bremsanlage überwunden ist. Mittels der vorliegenden Erfindung können somit beispielsweise Totzeiten und/oder eine zu geringe Dynamik einer weiteren/eigentlichen Bremseinrichtung des Fahrzeugs überbrückt werden. Somit kann die vorliegende Erfindung auch zur Ausstattung eines Fahrzeugs mit einer weniger aufwändigen, insbesondere kostengünstigeren Bremseinrichtung genutzt werden, welche beispielsweise mit einem kleineren und weniger leitungsstarken Motor und/oder einer weniger voluminösen/einfacheren Pumpe ausgestattet sein kann. Gleichzeitig gewährleistet die vorliegende Erfindung bereits bei einer derartigen Bremseinrichtung ein schnelles und verlässliches Ausführen von Fahrerassistenzfunktionen, wie beispielsweise Fußgängerschutzfunktionen.

Die oben beschriebenen Vorteile sind auch mittels einer Weiterbildung der Bremssteuervorrichtung und des Verfahrens zum Betreiben mindestens eines elektrischen Antriebsmotors gewährleistet.

Außerdem sind die Vorteile realisierbar mittels eines Bremssystems für ein Fahrzeug mit einer derartigen Bremssteuervorrichtung oder ihrer Weiterbildung.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Bremssteuervorrichtung; und
- Fig. 2a und 2b: Koordinatensysteme zum Erläutern einer Ausführungsform des Verfahrens zum Betreiben mindestens eines elektrischen Antriebsmotors.

### Ausführungsformen der Erfindung

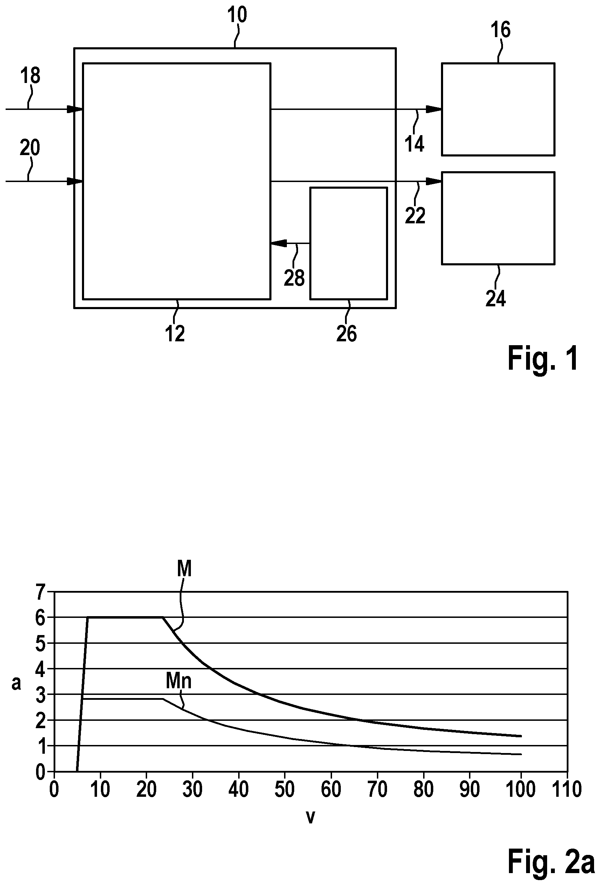

Fig. 1 zeigt eine schematische Darstellung einer Ausführungsform der Bremssteuervorrichtung.

Die in Fig. 1 schematisch dargestellte Bremssteuervorrichtung 10 ist in einem Fahrzeug einsetzbar. Ein mit der Bremssteuervorrichtung 10 ausgestattetes Fahrzeug kann beispielsweise ein Hybrid- oder ein Elektrofahrzeug sein. Es wird darauf hingewiesen, dass die Verwendbarkeit der Bremssteuervorrichtung 10 nicht für einen bestimmten Fahrzeugtyp limitiert ist.

Die Bremssteuervorrichtung 10 umfasst eine Ansteuereinrichtung 12, mittels welcher mindestens ein erstes Steuersignal 14 an mindestens einen elektrischen Antriebsmotor 16 des Fahrzeugs ausgehbar ist. Der mindestens eine elektrische Antriebsmotor 16 ist mittels des mindestens einen ersten Steuersignals 14 in einem Motormodus steuerbar, in welchem ein Generator-Bremsmoment ungleich Null auf mindestens ein (nicht skizziertes) Rad des Fahrzeugs durch den mindestens einen elektrischen Antriebsmotor 16 (vorzugsweise umfassend die Steuereinheit des Antriebsmotors 16 und die Leistungselektronik) ausübbar ist. Dabei ist der mindestens eine elektrische Antriebsmotor 16 mittels des mindestens einen ersten Steuersignals 14 in mindestens einen Überlastbetriebsmodus als Motormodus steuerbar. Die Bremssteuervorrichtung 10 nutzt somit den Vorteil, dass mittels des in den mindestens einen Überlastbetriebsmodus gesteuerten mindestens einen elektrischen Antriebsmotors 16 ein Generator-Bremsmoment ungleich Null auf das mindestens eine Rad ausübbar ist, wobei das Generator-Bremsmoment des in dem mindestens einen Überlastbetriebsmodus betriebenen mindestens einen elektrischen Antriebsmotor 16 in der Regel größer als das während eines Nennbetriebs des mindestens einen elektrischen Antriebsmotors 16 ausgeübte Generator-Bremsmoment ist.

Unter dem mindestens einen Überlastbetriebsmodus ist vorzugsweise ein Modus des mindestens einen elektrischen Antriebsmotors 16 zu verstehen, in welchem eine Leistung durch diesen geführt wird, welche bei einer längeren Bestromungsdauer zu einer Überhitzung des mindestens einen elektrischen Antriebsmotors 16 führen würde. Man kann den mindestens einen Überlastbetriebsmodus auch als einen Modus des mindestens einen elektrischen Antriebsmotors 16 bezeichnen, in welchem dieser mit einer höheren Leistung als bei einem Nennbetrieb betrieben wird.

Vorzugsweise ist die Bremssteuervorrichtung 10 dazu ausgelegt, den mindestens einen elektrischen Antriebsmotor 16 für ein Zeitintervall in den mindestens einen Überlastbetriebsmodus (ohne ein zwischenzeitliches Deaktivieren oder Betreiben in dem Nennbetrieb) zu steuern, welches kleiner als 1500 ms (Millisekunden), vorzugsweise kleiner als 1000 ms, insbesondere kleiner als 500 ms, bevorzugter Weise kleiner als 300 ms, ist. Somit ist eine thermische Schädigung des mindestens einen elektrischen Antriebsmotors 16 verlässlich verhinderbar.

Durch das zumindest kurzzeitige Betreiben des mindestens einen elektrischen Antriebsmotors 16 in dem mindestens einen Überlastbetriebsmodus ist eine schnellere/sofortigere Reduzierung einer aktuellen Fahrzeuggeschwindigkeit des Fahrzeugs bewirkbar.

In der Regel ist ein elektrischer Antriebsmotor 16 thermisch so ausgelegt, dass er einem kurzen Betrieb in dem mindestens einen Überlastbetriebsmodus ohne eine Überhitzung standhalten kann. Somit kann eine Vielzahl von kostengünstigen elektrischen Antriebsmotoren 16 mit der Bremssteuervorrichtung 10 zusammenwirken.

Das zumindest kurzzeitige Betreiben des mindestens einen elektrischen Antriebsmotors 16 in dem mindestens einen Überlastbetriebsmodus kann insbesondere dazu genutzt werden, einen Zeitverzug beim Aufbau eines Reibbremsmoments einer Reibbremse einer Bremseinrichtung des Fahrzeuges zu überbrücken. Beispielsweise kann das mindestens eine der mindestens einen Reibbremse zugeordnete Rad so lange mittels des mindestens einen in seinem Überlastbetriebsmodus betriebenen elektrischen Antriebmotors 16 abgebremst werden, bis eine (immanente) Verzögerung beim Aufbau des Reibbremsmoments überwunden ist. Das mit der Bremssteuervorrichtung 10 und dem mindestens einen elektrischen Antriebsmotor 16 ausgestattete Fahrzeug kann somit schnell abgebremst werden, auch wenn es mit einer Bremseinrichtung ausgestattet ist, welche eine vergleichsweise geringe Dynamik und relativ lange Totzeiten aufweist. Für die Ausstattung des Fahrzeugs ist somit eine kostengünstige Bremseinrichtung ausreichend, wobei die Kosteneinsparungen bei der verwendbaren Bremseinrichtung eventuelle Kosten einer thermischen Schutzausstattung des mindestens einen elektrischen Antriebsmotors 16 in der Regel übersteigen. Vor allem können Kosten für leistungsstarke Motoren und/oder Pumpen mit einem starken Pumpdruck eingespart werden. Es wird auch darauf hingewiesen, dass trotz eines Anbringens einer kostengünstigen Bremseinrichtung an dem Fahrzeug mit der Bremssteuervorrichtung 10 und dem mindestens einen elektrischen Antriebsmotor 16 eine Vielzahl von Sicherheitsfunktionen, wie beispielsweise ein schnell ausführbarer Fußgängerunfallschutz, verlässlich ausführbar sind.

Das Ausgeben des mindestens einen ersten Steuersignals 14 zum zumindest kurzzeitigen Steuern des mindestens einen elektrischen Antriebsmotors 16 in den mindestens einen Überlastbetriebsmodus erfolgt zumindest unter Berücksichtigung zumindest eines von einer fahrzeugeigenen Sensor- und/oder Steuereinrichtung bereitgestellten Bremsanforderungssignals 18. Das Bremsanforderungssignal 18 kann beispielsweise von einem fahrzeugeigenen Sensor bezüglich einer Betätigung eines Bremseingabeelements, wie z.B. eines Bremspedals, bereitgestellt sein. Der zum Bereitstellen des Bremsanforderungssignals 18 verwendete Sensor kann beispielsweise ein Bremskraftsensor, ein Bremsdrucksensor, ein Bremswegsensor, wie insbesondere ein Stangenwegsensor, sein. Das Bremsanforderungssignal 18 kann auch eine Information darüber enthalten, wie schnell ein Fahrer des Fahrzeugs das Bremsbetätigungselement betätigt. Als Bremsanforderungssignal 18 kann die Ansteuereinrichtung 12 jedoch auch ein von einem automatischen Geschwindigkeitssteuersystem und/oder einem automatischen Notbremssystem bereitgestelltes Signal berücksichtigen.

Der mindestens eine elektrische Antriebsmotor 16 kann ein einziger Antriebsmotor 16 sein. Ebenso kann das Fahrzeug mehrere elektrische Antriebsmotoren 16 aufweisen, welche beispielsweise jeder der Achsen des Fahrzeugs oder jedem Rad des Fahrzeugs zugeordnet sind, und darauf einwirken.

Bei der Ausführungsform der Fig. 1 ist die Ansteuereinrichtung 12 zusätzlich dazu ausgelegt, dass mindestens eine erste Steuersignal 14 unter zusätzlicher Berücksichtigung eines Gaspedalsignals 20 bezüglich einer Betätigung eines Gaspedals auszugeben. Beispielsweise kann die Ansteuereinrichtung 12 so ausgelegt sein, dass sie anhand der Signale 18 und 20 ein abruptes Beenden einer Gaspedalbetätigung und eine kurzzeitig danach erfolgende starke Bremsbetätigung des Fahrers feststellt und gegebenenfalls zumindest das mindestens eine erste Steuersignal 14 ausgibt.

Vorzugsweise ist die Ansteuereinrichtung 12 auch dazu ausgelegt, zusätzlich zu dem mindestens einen ersten Steuersignal 14 noch mindestens ein zweites Steuersignal 22 an eine Bremseinrichtung 24 des Fahrzeugs mit mindestens einer nicht dargestellten (zusätzlichen) Reibbremse auszugeben, wobei die Bremseinrichtung 24 durch das mindestens eine zweite Steuersignal 22 so ansteuerbar ist, dass gleichzeitig mit dem Generator-Bremsmoment ein Reibbremsmoment ungleich Null auf das mindestens eine Rad durch die mindestens eine Reibbremse ausübbar ist. Vorzugsweise ist die Ansteuereinrichtung 12 auch dazu ausgelegt, das mindestens eine zweite Steuersignal 22 unter Berücksichtigung des zumindest einen Bremsanforderungssignals 18 und/oder des mindestens einen Gaspedalsignals 20 bezüglich der Betätigung des Gaspedals auszugeben. Die mittels der Bremssteuervorrichtung 10 zusätzlich ansteuerbare Bremseinrichtung 24 kann beispielsweise eine pneumatische Reibbremse, eine hydraulische Reibbremse und/oder eine elektrische Reibbremse umfassen. In einer vorteilhaften Ausführungsform kann an die Ansteuereinrichtung 12 z.B. dazu ausgelegt sein, mittels des mindestens einen zweiten Steuersignals 22 ein hydraulisches Bremssystem als die Bremseinrichtung 24 so anzusteuern, dass das Reibbremsmoment ungleich Null auf das mindestens eine Rad durch mindestens einen Radbremszylinder des hydraulischen Bremssystems als mindestens eine Reibbremse ausübbar ist. Mittels des mindestens einen zweiten Steuersignals 22 können beispielsweise mindestens ein Ventil, mindestens eine Pumpe und/oder ein Bremskraftverstärker des hydraulischen Bremssystems ansteuerbar sein. Die Bremssteuervorrichtung 10 kann somit mit einer Vielzahl von verschiedenen Typen von Bremseinrichtungen 24 zusammenwirken. Insbesondere ist durch die Multifunktionalität der Bremssteuervorrichtung 10 gewährleistet, dass die Funktionsweisen der Bremseinrichtung 24 und des mindestens einen generatorisch betreibbaren elektrischen Antriebsmotors 16 optimal aufeinander abgestimmt sind.

Außerdem kann die Ansteuereinrichtung 12 dazu ausgelegt sein, das von einem fahrzeugeigenen Sensor bezüglich der Betätigung des Bremseingabeelements bereitgestellte Bremsanforderungssignal 18 und/oder das Gaspedalsignal 20 mit mindestens einem (von einer Speichereinheit 26 bereitgestellten) Normalwertebreich 28 zu vergleichen. Sofern das mindestens eine Bremsanforderungssignal 18 und/oder das Gaspedalsignal 20 außerhalb des mindestens einen Normalwertebereichs 28 liegen, ist die Ansteuereinrichtung 12 bevorzugter Weise dazu ausgelegt, den mindestens einen elektrischen Antriebsmotor 24 mittels des mindestens einen ersten Steuersignals 22 in den mindestens einen Überlastbetriebsmodus zu steuern. Andernfalls kann die Ansteuereinrichtung 12 dazu ausgelegt sein, den mindestens einen Antriebsmotor 16 (höchstens) in einen Nennbetriebmodus zu steuern. Somit kann der mindestens eine elektrische Antriebsmotor 16 vorzugsweise immer nur dann in den mindestens einen Überlastbetriebsmodus gesteuert werden, wenn anhand einer Betätigung des Bremseingabeelements und/oder des Gaspedals feststellbar ist, dass der Fahrer ein plötzliches Abbremsen des Fahrzeugs wünscht. Insbesondere in einer Notbremssituation kann das Fahrzeug somit durch ein generatorisches Betreiben des mindestens einen elektrischen Antriebsmotors 16 in dem mindestens einen Überlastbetriebsmodus schnell und verlässlich zum Stillstand gebracht werden.

Die Ansteuereinrichtung 12 ist dazu ausgelegt, den mindestens einen elektrischen Antriebsmotor 16 in verschiedenen Überlastbetriebsmoden zu betreiben. Die Ansteuereinrichtung 12 ist dazu ausgelegt, den mindestens einen elektrischen Antriebsmotor 16 mittels des mindestens einen ersten Steuersignals 14 für ein erstes Zeitintervall in einen ersten Überlastbetriebsmodus mit einem ersten Auslastungsgrad und für ein zweites Zeitintervall in einem zweiten Überlastbetriebsmodus mit einem zweiten Auslastungsgrad kleiner als dem ersten Auslastungsgrad zu steuern. Eine thermische Schädigung des mindestens einen elektrischen Antriebsmotors 16 ist beispielsweise verlässlich verhindert, wenn die Ansteuereinrichtung 12 dazu ausgelegt ist, den mindestens einen elektrischen Antriebsmotor 16 mittels des mindestens einen ersten Steuersignals 14 für das erste Zeitintervall in den ersten Überlastbetriebsmodus mit dem ersten Auslastungsgrad von 70% Überlast und für das zweite Zeitintervall in dem zweiten Überlastmodus mit dem zweiten Auslastungsgrad von 30% Überlast zu steuern. Das erste Zeitintervall und/oder das zweite Zeitintervall können beispielsweise 200 ms (Millisekunden) lang sein. Mittels eines derartigen Betreibens des mindestens einen elektrischen Antriebsmotors 16 ist eine Totzeit der Bremseinrichtung 28 verlässlich überbrückbar, so dass das Fahrzeug schnell mit einer vergleichsweise großen Verzögerung abbremsbar ist. Gleichzeitig kann ein elektrischer Antriebsmotor 16 in der Regel ohne eine Überhitzung für die genannten Dauern der Zeitintervalle betrieben werden.
Die oben ausgeführten Vorteile sind auch bei einem Bremssystem für ein Fahrzeug mit einer entsprechenden Bremssteuervorrichtung 10 gewährleistet.

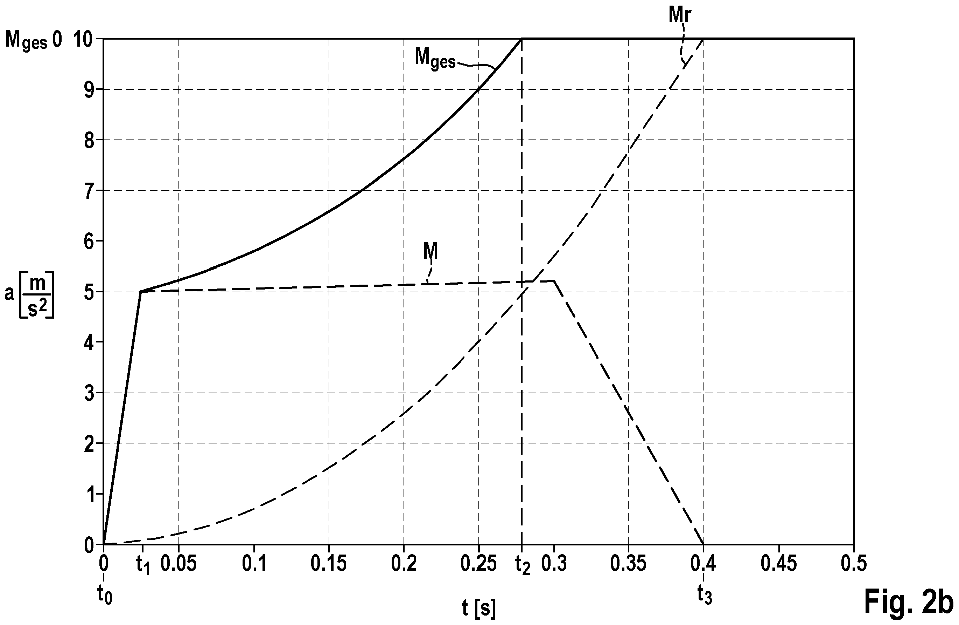

Fig. 2a und 2b zeigen Koordinatensysteme zum Erläutern einer Ausführungsform des Verfahrens zum Betreiben mindestens eines elektrischen Antriebsmotors.
Das im Weiteren beschriebene Verfahren kann beispielsweise von der oben erläuterten Bremssteuervorrichtung ausgeführt werden. Die Ausführbarkeit des Verfahrens ist jedoch nicht auf die Nutzung einer derartigen Bremssteuervorrichtung limitiert.

Bei einer Ausführung des im Weiteren beschriebenen Verfahrens wird mindestens ein elektrischer Antriebsmotor bei einer Bremsanforderung in einem Motormodus betrieben, in welchem ein Generator-Bremsmoment ungleich Null auf mindestens ein Rad des mit dem mindestens einen elektrischen Antriebsmotor ausgestatteten Fahrzeugs durch den mindestens einen elektrischen Antriebsmotor ausgeübt wird. Dabei wird der mindestens eine elektrische Antriebsmotor in mindestens einem Überlastbetriebsmodus als Motormodus betrieben.

Wie in dem Koordinatensystem der Fig. 2a dargestellt ist, wird von dem in dem mindestens einen Überlastbetriebsmodus betriebenen mindestens einen elektrischen Antriebsmotor ein Generator-Bremsmoment M ungleich Null auf das mindestens eine Rad ausgeübt. Das von dem in dem mindestens einen Überlastbetriebsmodus betriebenen mindestens einen elektrischen Antriebsmotor ausgeübte Generator-Bremsmoment M kann abhängig von einer Geschwindigkeit v des Fahrzeugs sein, welche mittels der Abszisse des Koordinatensystems der Fig. 2a wiedergegeben ist. Zum Vergleich ist in dem Koordinatensystem der Fig. 2a auch ein Nennbetriebs-Generator-Bremsmoment Mn eingetragen, welches maximal mittels des in seinem Nennbetrieb betriebenen mindestens einen elektrischen Antriebsmotors auf das mindestens eine zugeordnete Rad ausübbar ist. Wie anhand eines Vergleichs der Graphen M und Mn erkennbar ist, wird während des zumindest kurzzeitigen Betreibens des mindestens einen elektrischen Antriebsmotors in dem mindestens einen Überlastbetriebsmodus ein größerer Betrag a einer negativen Verzögerung des auf diese Weise abgebremsten Fahrzeugs bewirkt. Der Betrag a der negativen Verzögerung ist als Ordinate des Koordinatensystems der Fig. 2a wiedergegeben.

Bei dem hier beschriebenen Verfahren wird (bei einer Bremsanforderung) zusätzlich eine Bremseinrichtung des Fahrzeugs mit mindestens einer (zusätzlichen) Reibbremse so betrieben, dass gleichzeitig mit dem Generator-Bremsmoment M ein Reibbremsmoment Mr ungleich Null auf das mindestens eine Rad durch die mindestens eine Reibbremse ausgeübt wird. Die Bremsanforderung wird zu einem Zeitpunkt t0 erkannt, welche mittels der Abszisse des Koordinatensystems der Fig. 2b als Zeitachse t (in Sekunden) wiedergegeben ist. (Die Ordinate des Koordinatensystems der Fig. 2b gibt den Betrag a der negativen Beschleunigung (in m/s²) wieder.) Die Bremsanforderung kann beispielsweise eine Bremsanforderung des Fahrers durch eine Betätigung eines Bremseingabeelements sein. Beispiele für ein geeignetes Bremseingabeelement und einen einsetzbaren Sensor zum Erkennen der Bremsanforderung des Fahrers sind oben schon beschrieben. Die Bremsanforderung kann jedoch auch anhand eines Signals eines automatischen Geschwindigkeitssteuersystems und/oder eines Notbremssystems erkannt werden.

Zusätzlich kann der mindestens eine elektrische Antriebsmotor auch unter Berücksichtigung einer Betätigung eines Gaspedals in den mindestens einen Überlastbetriebsmodus gesteuert werden. Zum Erkennen einer Situation, in welcher der Fahrer ein möglichst schnelles Abbremsen seines Fahrzeugs wünscht, kann als Bremsanforderung eine erste Betätigungsstärke einer Betätigung eines Bremseingabeelements und/oder eine zweite Betätigungsstärke einer Betätigung des Gaspedals mit mindestens einem Normalwertebereich verglichen werden. Mittels eines derartigen Auswertens mindestens einer dieser Größen kann eine Notbremssituation verlässlich erkannt werden. Sofern die erste Betätigungsstärke und/oder die zweite Betätigungsstärke außerhalb des mindestens einen Normalwertebereichs liegen, wird der mindestens eine elektrische Antriebsmotor vorzugsweise in den mindestens einen Überlastbetriebsmodus gesteuert. Anderenfalls wird ein Steuern des mindestens einen elektrischen Antriebsmotors (höchstens) in seinen Nennmodus bevorzugt. Unter der ersten Betätigungsstärke und/oder der zweiten Betätigungsstärke können auch zeitliche Ableitungen einer auf das jeweilige Betätigungselement aufgebrachten Kraft, eines darauf aufgebrachten Drucks und/oder eines Verstellwegs des jeweiligen Betätigungselements verstanden werden. Beispielsweise kann das Steuern/Betreiben des mindestens einen elektrischen Antriebsmotors in dem mindestens einen Überlastbetriebsmodus nach einem Erkennen eines abrupten Lösens des Gaspedals und einer anschließenden starken Bremsbetätigung erfolgen.

Mittels des hier beschriebenen Verfahrens kann bereits in einem kurzen Zeitintervall zwischen den Zeiten t0 und t1 ein vergleichsweise großes Generator-Bremsmoment des mindestens einen in dem mindestens einen Überlastbetriebsmodus betriebenen elektrischen Antriebsmotors aufgebaut werden. Demgegenüber ist die Dynamik der Bremseinrichtung mit der mindestens einen Reibbremse so gering, dass zu einer Zeit t1 das Reibbremsmoment Mr noch (nahezu) gleich Null ist. Trotzdem ist aufgrund des Generator-Bremsmoments M bereits zu der Zeit t1 ein vergleichsweise großes Gesamtbremsmoment Mges (aus dem Reibbremsmoment Mr und dem Generator-Bremsmoment M) auf mindestens ein Rad des Fahrzeugs ausübbar.

Zu einer Zeit t2 ist das Reibbremsmoment Mr so stark angestiegen, dass das Gesamtbremsmoment Mges gleich einem vorgegebenen Soll-Gesamtbremsmoment MgesO ist. Deshalb wird ab der Zeit t2 der mindestens eine zuvor in seinem Überlastbetriebsmodus betriebene elektrische Antriebsmotor langsam deaktiviert. Dies bewirkt ein Reduzieren des Generator-Bremsmoments M auf (nahezu) Null bis zu einem Zeitpunkt t3. Gleichzeitig wird das Reibbremsmoment Mr weiterhin so gesteigert, so dass das Gesamtbremsmoment Mges das vorgegebene Soll-Gesamtbremsmoment MgesO einhält. Somit können der mindestens eine elektrische Antriebsmotor verlässlich vor einer Überhitzung geschützt und gleichzeitig das Fahrzeug mit der gewünschten Verzögerung schnell zum Stillstand gebracht werden.
Das Herunterfahren des zuvor in seinen Überlastbetriebsmodus betriebenen mindestens einen elektrischen Antriebsmotors und das gleichzeitige Steigern des Reibbremsmoments Mr kann durch eine dafür geeignete Strategie, wie beispielsweise durch die Nutzung von Übergangskennlinien, erfolgen. Dabei kann auch ein Master-Slave-Betrieb zum Einsatz kommen, wobei das Master-Prinzip dem Slave-System das anteilig bereitzustellende Bremsmoment vorgibt.

Das Herunterfahren des mindestens einen elektrischen Antriebsmotors erfolgt stufenweise. Der mindestens eine elektrische Antriebsmotor wird für ein erstes Zeitintervall in einem ersten Überlastbetriebsmodus mit einem ersten Auslastungsgrad und für ein zweites Zeitintervall in einem zweiten Überlastbetriebsmodus mit einem zweiten Auslastungsgrad kleiner als dem ersten Auslastungsgrad betrieben. Der erste Auslastungsgrad kann beispielsweise 70% Überlast sein, während der zweite Auslastungsgrad auf 30% Überlast reduziert ist. Die hier angegebenen Zahlenwerte sind jedoch nur beispielhaft zu interpretieren. Auf diese Weise kann der mindestens eine elektrische Antriebsmotor so heruntergefahren werden, dass bei einem verlässlichen Schutz des mindestens einen elektrischen Antriebsmotors vor Überhitzung noch ein relativ hohes Gesamtbremsmoment Mges auf das mindestens eine zugeordnete Rad ausgeübt wird.
Die Verwendung der oben beschriebenen Bremssteuervorrichtung oder die Ausführung des hier beschriebenen Verfahrens ist erkennbar durch das Messen eines Stromflusses durch den mindestens einen elektrischen Antriebsmotor eines Fahrzeugs bei einem schnellen Anhalten, wie beispielsweise einer Notbremsung. Außerdem können diese Sachverhalte festgestellt werden durch das Verhältnis des Bremsdrucks der mindestens einen Reibbremse und der Gesamt-Fahrzeugverzögerung.

## Patentansprüche

1. Bremssteuervorrichtung (10) für ein Fahrzeug mit:
einer Ansteuereinrichtung (12), mittels welcher zumindest unter Berücksichtigung zumindest eines von einer fahrzeugeigenen Sensor- und/oder Steuereinrichtung bereitgestellten Bremsanforderungssignals (18) mindestens ein erstes Steuersignal (14) an mindestens einen elektrischen Antriebsmotor (16) des Fahrzeugs ausgebbar ist, durch welches der mindestens eine elektrische Antriebsmotor (16) in einen Motormodus steuerbar ist, in welchem ein Generator-Bremsmoment (M) ungleich Null auf mindestens ein Rad des Fahrzeugs durch den mindestens einen elektrischen Antriebsmotor (16) ausübbar ist,
**dadurch gekennzeichnet, dass**
der mindestens eine elektrische Antriebsmotor (16) mittels des mindestens einen ersten Steuersignals (14) in mindestens einen Überlastbetriebsmodus als Motormodus steuerbar ist, in welchem das Generator-Bremsmoment (M) ungleich Null auf das mindestens eine Rad ausübbar ist, und wobei die Ansteuereinrichtung (12) dazu ausgelegt ist, den mindestens einen elektrischen Antriebsmotor (16) mittels des mindestens einen ersten Steuersignals (14) für ein erstes Zeitintervall in einen ersten Überlastbetriebsmodus mit einem ersten Auslastungsgrad und für ein zweites Zeitintervall in einen zweiten Überlastbetriebsmodus mit einem zweiten Auslastungsgrad kleiner als dem ersten Auslastungsgrad zu steuern.

2. Bremssteuervorrichtung (10) nach Anspruch 1, wobei mittels der Ansteuereinrichtung (12) zusätzlich zu dem mindestens einen ersten Steuersignal (14) noch mindestens ein zweites Steuersignal (22) an eine Bremseinrichtung (24) des Fahrzeugs mit mindestens einer Reibbremse ausgebbar ist, durch welches die Bremseinrichtung (24) so ansteuerbar ist, dass gleichzeitig mit dem Generator-Bremsmoment (M) ein Reibbremsmoment (Mr) ungleich Null auf das mindestens eine Rad durch die mindestens eine Reibbremse ausübbar ist.

3. Bremssteuervorrichtung (10) nach Anspruch 2, wobei die Ansteuereinrichtung (12) dazu ausgelegt ist, mittels des mindestens einen zweiten Steuersignals (22) ein hydraulisches Bremssystem als die Bremseinrichtung (24) so anzusteuern, das das Reibbremsmoment (Mr) ungleich Null auf das mindestens eine Rad durch mindestens einen Radbremszylinder des hydraulischen Bremssystems als die mindestens eine Reibbremse ausübbar ist.

4. Bremssteuervorrichtung (10) nach einem der vorhergehenden Ansprüche, wobei die Ansteuereinrichtung (12) dazu ausgelegt ist, das mindestens eine erste Steuersignal (14) und/oder das mindestens eine zweite Steuersignal (22) unter zusätzlicher Berücksichtigung eines Gaspedalsignals (20) bezüglich einer Betätigung eines Gaspedals auszugeben.

5. Bremssteuervorrichtung (10) nach einem der vorhergehenden Ansprüche, wobei die Ansteuereinrichtung (12) dazu ausgelegt ist, das von einem fahrzeugeigenen Sensor bezüglich einer Betätigung eines Bremseingabeelements bereitgestellte Bremsanforderungssignal (18) und/oder das Gaspedalsignal (20) mit mindestens einem Normalwertebereich (28) zu vergleichen, und, sofern das mindestens eine Bremsanforderungssignal (18) und/oder das Gaspedalsignal (20) außerhalb des mindestens einen Normalwertebereichs (28) liegen, den mindestens einen elektrischen Antriebsmotor (16) mittels des mindestens einen ersten Steuersignals (14) in den mindestens einen Überlastbetriebsmodus zu steuern.

6. Bremssteuervorrichtung (10) nach Anspruch 1, wobei die Ansteuereinrichtung (12) dazu ausgelegt ist, den mindestens einen elektrischen Antriebsmotor (16) mittels des mindestens einen ersten Steuersignals (14) für das erste Zeitintervall in den ersten Überlastbetriebsmodus mit dem ersten Auslastungsgrad von 70% Überlast und für das zweite Zeitintervall in den zweiten Überlastbetriebsmodus mit dem zweiten Auslastungsgrad von 30% Überlast zu steuern.

7. Bremssystem für ein Fahrzeug mit einer Bremssteuervorrichtung (10) nach einem der vorhergehenden Ansprüche.

8. Verfahren zum Betreiben mindestens eines elektrischen Antriebsmotors (16) für ein Fahrzeug mit dem Schritt:
Betreiben des mindestens einen elektrischen Antriebsmotors (16) bei einer Bremsanforderung in einem Motormodus, in welchem ein Generator-Bremsmoment (M) ungleich Null auf mindestens ein Rad des Fahrzeugs durch den mindestens einen elektrischen Antriebsmotor (16) ausgeübt wird;
**dadurch gekennzeichnet, dass**
der mindestens eine elektrische Antriebsmotor (16) in mindestens einem Überlastbetriebsmodus als Motormodus betrieben wird, in welchem das Generator-Bremsmoment (M) ungleich Null auf das mindestens eine Rad ausgeübt wird, wobei der mindestens eine elektrische Antriebsmotor (16) für ein erstes Zeitintervall in einem ersten Überlastbetriebsmodus mit einem ersten Auslastungsgrad und für ein zweites Zeitintervall in einem zweiten Überlastbetriebsmodus mit einem zweiten Auslastungsgrad kleiner als dem ersten Auslastungsgrad betrieben wird.

9. Verfahren nach Anspruch 8, wobei zusätzlich eine Bremseinrichtung (24) des Fahrzeugs mit mindestens einer Reibbremse so betrieben wird, dass gleichzeitig mit dem Generator-Bremsmoment (M) ein Reibbremsmoment (Mr) ungleich Null auf das mindestens eine Rad durch die mindestens eine Reibbremse ausgeübt wird.

10. Verfahren nach Anspruch 8 oder 9, wobei der mindestens eine elektrische Antriebsmotor (16) unter zusätzlicher Berücksichtigung einer Betätigung eines Gaspedals in den mindestens einen Überlastbetriebsmodus gesteuert wird.

11. Verfahren nach einem der Ansprüche 8 bis 10, wobei als Bremsanforderung eine erste Betätigungsstärke einer Betätigung eines Bremseingabeelements und/oder eine zweite Betätigungsstärke der Betätigung des Gaspedals mit mindestens einem Normalwertebereich (28) verglichen werden, und, sofern die erste Betätigungsstärke und/oder die zweite Betätigungsstärke außerhalb des mindestens einen Normalwertebereichs (28) liegen, der mindestens eine elektrische Antriebsmotor (16) in den mindestens einen Überlastbetriebsmodus gesteuert wird.

12. Verfahren nach Anspruch 8, wobei der mindestens eine elektrische Antriebsmotor (16) für das erste Zeitintervall in dem ersten Überlastbetriebsmodus mit dem ersten Auslastungsgrad von 70% Überlast und für das zweite Zeitintervall in dem zweiten Überlastbetriebsmodus mit dem zweiten Auslastungsgrad von 30% Überlast betrieben wird.

## Claims

1. Brake control device (10) for a vehicle, comprising:
an actuation device (12) by means of which at least one first control signal (14) can be output to at least one electric drive motor (16) of the vehicle at least taking into account at least one brake request signal (18) which is made available by a vehicle-specific sensor device and/or control device, by means of which control signal (14) the at least one electric drive motor (16) can be adjusted to a motor mode in which a generator braking torque (M) which is unequal to zero can be applied to at least one wheel of the vehicle by means of the at least one electric drive motor (16),
**characterized in that**
the at least one electric drive motor (16) can be adjusted, by means of the at least one first control signal (14), into at least one overload operating mode as a motor mode in which the generator braking torque (M) which is unequal to zero can be applied to the at least one wheel, and wherein the actuation device (12) is configured to adjust the at least one electric drive motor (16) for one first time interval into one first overload operating mode with one first utilization rate and for one second time interval into a second overload operating mode with a second utilization rate, which is lower than the first utilization rate by means of the at least one first control signal (14).

2. Brake control device (10) according to Claim 1, wherein by means of the actuation device (12), at least one second control signal (22) can be output, in addition to the at least one first control signal (14), to a brake device (24) of the vehicle with at least one friction brake, by means of which second control signal (22) the brake device (24) can be actuated in such a way that a friction braking torque (Mr) which is unequal to zero can be applied to the at least one wheel by means of the at least one friction brake at the same time as the generator braking torque (M).

3. Brake control device (10) according to Claim 2, wherein the actuation device (12) is configured to actuate a hydraulic brake system as the brake device (24) by means of the at least one second control signal (22), in such a way that the friction braking torque (Mr) which is unequal to zero can be applied to the at least one wheel by means of at least one wheel brake cylinder of the hydraulic brake system as the at least one friction brake.

4. Brake control device (10) according to one of the preceding claims, wherein the actuation device (12) is configured to output the at least one first control signal (14) and/or the at least one second control signal (22) while additionally taking into account an accelerator pedal signal (20) with respect to activation of an accelerator pedal.

5. Brake control device (10) according to one of the preceding claims, wherein the actuation device (12) is configured to compare the braking request signal (18) which is made available by a vehicle-specific sensor with respect to activation of a brake input element and/or the accelerator pedal signal (20) with at least one normal value range (28), and if the at least one braking request signal (18) and/or the accelerator pedal signal (20) are/is outside the at least one normal value range (28), to adjust the at least one electric drive motor (16) into the at least one overload operating mode by means of the at least one first control signal (14).

6. Brake control device (10) according to Claim 1, wherein the actuation device (12) is configured to adjust the at least one electric drive motor (16) into the first overload operating mode with the first utilization rate of 70% overload for the first time interval and into the second overload operating mode with the second utilization rate of 30% overload for the second time interval, by means of the at least one first control signal (14).

7. Brake system for a vehicle having a brake control device (10) according to one of the preceding claims.

8. Method for operating at least one electric drive motor (16) for a vehicle, comprising the step:
Operating the at least one electric drive motor (16), in the case of a braking request, in a motor mode in which a generator braking torque (M) which is unequal to zero is applied to at least one wheel of the vehicle by means of the at least one electric drive motor (16);
**characterized in that**
the at least one electric drive motor (16) is operated in at least one overload operating mode as a motor mode in which the generator braking torque (M) which is unequal to zero is applied to the at least one wheel, wherein the at least one electric drive motor (16) is operated in a first overload operating mode with a first utilization rate for a first time interval and in a second overload operating mode with a second utilization rate, which is lower than the first utilization rate, for a second time interval.

9. Method according to Claim 8, wherein in addition a brake device (24) of the vehicle is operated with at least one friction brake in such a way a friction braking torque (Mr) which is unequal to zero is applied to the at least one wheel by means of the at least one friction brake at the same time as the generator braking mode (M).

10. Method according to Claim 8 or 9, wherein the at least one electric drive motor (16) is introduced in to the at least one overload operating mode while additionally taking into account activation of an accelerator pedal.

11. Method according to one of Claims 8 to 10, wherein a first intensity of activation of activation of a brake input element and/or a second intensity of activation of the actuation of the accelerator pedal as a braking request are/is compared with at least one normal value range (28), and if the first intensity of activation and/or the second intensity of activation lie outside the at least one normal value range (28), the at least one electric drive motor (16) is adjusted to the at least one overload operating mode.

12. Method according to Claim 8, wherein the at least one electric drive motor (16) is operated in the first overload operating mode with the first utilization rate of 70% overload for the first time interval and in the second overload operating mode with the second utilization rate of 30% overload for the second time interval.

## Revendications

1. Arrangement de commande de frein (10) pour un véhicule, comprenant :
un dispositif de pilotage (12) au moyen duquel au moins un premier signal de commande (14) peut être délivré à au moins un moteur de propulsion (16) électrique du véhicule, au moins en tenant compte d'au moins un signal de demande de freinage (18) fourni par un dispositif capteur et/ou de commande propre au véhicule, par lequel l'au moins un moteur de propulsion (16) électrique peut être commandé dans un mode moteur dans lequel un moment de freinage de générateur (M) différent de zéro peut être exercé sur au moins une roue du véhicule par l'au moins un moteur de propulsion (16) électrique,
**caractérisé en ce que**
l'au moins un moteur de propulsion (16) électrique peut être commandé au moyen de l'au moins un premier signal de commande (14) dans au moins un mode de fonctionnement en surcharge en tant que mode moteur, dans lequel le moment de freinage de générateur (M) différent de zéro peut être exercé sur l'au moins une roue, et le dispositif de pilotage (12) étant conçu pour commander l'au moins un moteur de propulsion (16) électrique au moyen de l'au moins un premier signal de commande (14) pendant un premier intervalle de temps dans un premier mode de fonctionnement en surcharge avec un premier taux d'utilisation et pendant un deuxième intervalle de temps dans un deuxième mode de fonctionnement en surcharge avec un deuxième taux d'utilisation inférieur au premier taux d'utilisation.

2. Arrangement de commande de frein (10) selon la revendication 1, au moins un deuxième signal de commande (22) pouvant, en plus de l'au moins un premier signal de commande (14), encore être délivré au moyen du dispositif de pilotage (12) à un dispositif de freinage (24) du véhicule comprenant au moins un frein à friction, par le biais duquel le dispositif de freinage (24) peut être commandé de telle sorte qu'un moment de freinage par friction (Mr) différent de zéro peut être exercé simultanément avec le moment de freinage de générateur (M) sur l'au moins une roue par l'au moins un frein à friction.

3. Arrangement de commande de frein (10) selon la revendication 2, le dispositif de pilotage (12) étant conçu pour piloter, au moyen de l'au moins un deuxième signal de commande (22), un système de freinage hydraulique en tant que dispositif de freinage (24) de telle sorte que le moment de freinage par friction (Mr) différent de zéro peut être exercé sur l'au moins une roue par au moins un cylindre de frein de roue du système de freinage hydraulique en tant que l'au moins un frein à friction.

4. Arrangement de commande de frein (10) selon l'une des revendications précédentes, le dispositif de pilotage (12) étant conçu pour délivrer l'au moins un premier signal de commande (14) et/ou l'au moins un deuxième signal de commande (22) en tenant en plus compte d'un signal de pédale d'accélérateur (20) concernant un actionnement d'une pédale d'accélérateur.

5. Arrangement de commande de frein (10) selon l'une des revendications précédentes, le dispositif de pilotage (12) étant conçu pour comparer le signal de demande de freinage (18) fourni par un capteur propre au véhicule concernant un actionnement d'un élément d'entrée de freinage et/ou le signal de pédale d'accélérateur (20) à au moins une plage de valeurs normales (28) et, dans la mesure où l'au moins un signal de demande de freinage (18) et/ou le signal de pédale d'accélérateur (20) se trouvent en-dehors de l'au moins une plage de valeurs normales (28), commander l'au moins un moteur de propulsion (16) électrique au moyen de l'au moins un premier signal de commande (14) dans l'au moins un mode de fonctionnement en surcharge.

6. Arrangement de commande de frein (10) selon la revendication 1, le dispositif de pilotage (12) étant conçu pour commander l'au moins un moteur de propulsion (16) électrique au moyen de l'au moins un premier signal de commande (14) pendant le premier intervalle de temps dans le premier mode de fonctionnement en surcharge avec le premier taux d'utilisation de 70 % de surcharge et pendant le deuxième intervalle de temps dans le deuxième mode de fonctionnement en surcharge avec le deuxième taux d'utilisation de 30 % de surcharge.

7. Système de freinage pour un véhicule comprenant un arrangement de commande de frein (10) selon l'une des revendications précédentes.

8. Procédé pour faire fonctionner au moins un moteur de propulsion (16) électrique pour un véhicule, comprenant l'étape :
fonctionnement de l'au moins un moteur de propulsion (16) électrique en présence d'une demande de freinage dans un mode moteur, dans lequel un moment de freinage de générateur (M) différent de zéro est exercé sur au moins une roue du véhicule par l'au moins un moteur de propulsion (16) électrique,
**caractérisé en ce que**
l'au moins un moteur de propulsion (16) électrique fonctionne dans au moins un mode de fonctionnement en surcharge en tant que mode moteur, dans lequel le moment de freinage de générateur (M) différent de zéro est exercé sur l'au moins une roue, l'au moins un moteur de propulsion (16) électrique fonctionnant pendant un premier intervalle de temps dans un premier mode de fonctionnement en surcharge avec un premier taux d'utilisation et pendant un deuxième intervalle de temps dans un deuxième mode de fonctionnement en surcharge avec un deuxième taux d'utilisation inférieur au premier taux d'utilisation.

9. Procédé selon la revendication 8, un dispositif de freinage (24) du véhicule comprenant au moins un frein à friction fonctionnant en plus de telle sorte qu'un moment de freinage par friction (Mr) différent de zéro peut être exercé simultanément avec le moment de freinage de générateur (M) sur l'au moins une roue par l'au moins un frein à friction.

10. Procédé selon la revendication 8 ou 9, l'au moins un moteur de propulsion (16) électrique étant commandé en tenant en plus compte d'un actionnement d'une pédale d'accélérateur dans l'au moins un mode de fonctionnement en surcharge.

11. Procédé selon l'une des revendications 8 à 10, une première intensité d'actionnement d'un actionnement d'un élément d'entrée de freinage et/ou une deuxième intensité d'actionnement de l'actionnement de la pédale d'accélérateur en tant que demande de freinage étant comparées à au moins une plage de valeurs normales (28) et, dans la mesure où la première intensité d'actionnement et/ou la deuxième intensité d'actionnement se trouvent en-dehors de l'au moins une plage de valeurs normales (28), l'au moins un moteur de propulsion (16) électrique est commandé dans l'au moins un mode de fonctionnement en surcharge.

12. Procédé selon la revendication 8, l'au moins un moteur de propulsion (16) électrique fonctionnant pendant le premier intervalle de temps dans le premier mode de fonctionnement en surcharge avec le premier taux d'utilisation de 70 % de surcharge et pendant le deuxième intervalle de temps dans le deuxième mode de fonctionnement en surcharge avec le deuxième taux d'utilisation de 30 % de surcharge.
